# EUROPEAN PATENT APPLICATION

(11) **EP 2 261 011 A1**
(43) Date of publication of application: **15.12.2010**
(21) Application number: 09724730.8
(22) Date of filing: 11.03.2009
(51) Int. Cl.: B29C 73/02, B29C 73/24

(54) **TIRE PUNCTURE REPAIR APPARATUS**

(30) Priority: 25.03.2008 JP 2008078464; 25.03.2008 JP 2008078465; 02.06.2008 JP 2008144770
(71) Applicant: Sumitomo Rubber Industries, Ltd., Kobe-shi, Hyogo 651-0072 (JP)
(72) Inventor: KOJIMA, Yoshihide, Kobe-shi Hyogo 651-0072 (JP)
(74) Representative: Manitz, Finsterwald & Partner GbR
(86) International application number: PCT/JP2009/054660
(87) International publication number: WO 2009/119317

(57) **Abstract**

To carry out tire puncture repair and to inflate an air-inflation target object with solely compressed air, selectively by a changeover switch, so as to achieve greater versatility.

A housing case 2 houses a compressor 3, a sealing agent container 6 in which a cap element 5 is attached to a mouth portion 4A of a container body 4 that stores a sealing agent, and a changeover switch 8 that is interposed between the compressor 3 and an air intake port portion 7 provided at the cap element 5. The changeover switch 8 has an in-flow port PO into which compressed air from the compressor 3 flows, and first and second out-flow ports P1 and P2 that are selectively changed over to communicate with the in-flow port P0. The first out-flow port Pal and the air intake port portion 7 are connected to each other by a connection hose 75. A puncture repair dedicated hose 77 is coupled to a sealing agent/compressed air ejector port portion 41 provided at the cap element 5, and a compressed air inflation dedicated hose 23 is coupled to the second out-flow port P2.

## Description

### Technical Field

The present invention relates to a tire puncture repair apparatus that makes it possible to carry out tire puncture repair and to inflate an air-inflation target object solely with compressed air, selectively by use of a changeover switch.

### Background Art

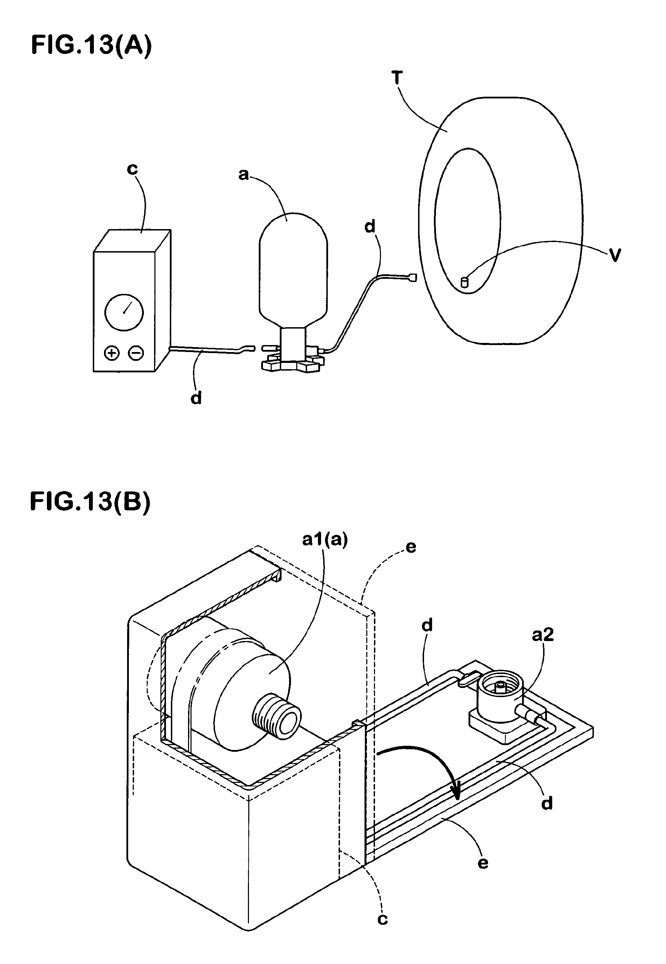

As exemplarily shown in FIG. 13A, there has been proposed a puncture repair apparatus for repairing a tire puncture in a makeshift manner, in which a tire T and a compressor c are connected to a sealing agent container a using hoses d. This apparatus sends compressed air from the compressor c to the sealing agent container a, so as to pneumatically send the puncture sealing agent in the sealing agent container a into the tire T, and to allow the compressed air that successively follows to automatically pump up the tire T. However, apparatuses of such a kind require many working steps such as assembling the apparatus and/or attaching the hoses (piping) when carrying out the puncture repair on the premises. Thus, they pose a problem of poor handleability.

To cope with the problem, as shown in FIG. 13B, there has been proposed in Patent Document 1 an integrated type puncture repair apparatus, in which a sealing agent container a, a compressor c, and hoses d are substantially previously connected to one another, and are housed in a case in that state.
[Patent Document 1] Japanese Patent Application Publication No. 2001-212883

### Disclosure of the Invention

### Technical Problems to be Solved

However, with this apparatus, it is required to open a door element e, to take out a sealing agent container body a1 housed in the case, to stand the container body a1 upside-down to attach it to a cap element a2 being fixed to the door element e. Hence, there is still room for improvement in terms of operability.

Meanwhile, it is said that the recent frequency of occurrence of tire punctures is about once every 70,000 km, or about once every six to seven years, which means that the frequency of actual use of the puncture repair apparatuses is very low. Accordingly, what is desired in recent years is to provide a puncture repair apparatus with a function of inflating an object with solely compressed air, such that it can be used for raising the pressure of a tire, which is not punctured but whose air pressure is reduced, to the regular internal pressure, and for inflating a rubber dinghy or an inflatable swim ring, for example.

Accordingly, an object of the present invention is to provide a tire puncture repair apparatus that houses, inside a case, a sealing agent storing container, a compressor, and hoses in a state previously completely connected to one another, so as to further enhance the convenience of the above-described integrated type puncture repair apparatus, and that makes it possible to inflate, selectively by use of a changeover switch, an air-inflation target object solely with compressed air, so as to achieve greater versatility.

### Means to Solve the Problems

A tire puncture repair apparatus of the present invention includes
a housing case, storing therein:
a compressor that produces compressed air;
a sealing agent container that includes a container body storing therein a sealing agent for sealing a punctured tire, and a cap element attaching to a mouth portion of the container body, the cap element being provided with an air intake port portion for sending the compressed air from the compressor to the container body and a sealing agent/compressed air ejector port portion for successively ejecting, by the sent compressed air, the puncture sealing agent and the compressed air from the container body; and
a changeover switch interposed between the compressor and the air intake port portion, wherein
the changeover switch has an in-flow port into which the compressed air from the compressor flows in, and first and second out-flow ports that are selectively changed over to communicate with the in-flow port,
the first out-flow port and the air intake port portion are connected to each other by a connection hose,
the sealing agent/compressed air ejector port portion is coupled to one end of a puncture repair dedicated hose, the puncture repair dedicated hose being provided at its other end with a connection port portion that can be connected to the punctured tire, and
the second out-flow port is coupled to one end of a compressed air inflation dedicated hose, the compressed air inflation dedicated hose being provided at its other end with a connection port portion that can be connected to an air-inflation target object other than the punctured tire.

### Effect of the Invention

Because the apparatus of the present invention is structured in a manner as described above, by connecting the connection port portion of the puncture repair dedicated hose to a punctured tire and driving the compressor, the puncture sealing agent and the compressed air can be successively sent into the punctured tire so as to carry out the puncture repair in a convenient manner. Further, by connecting the connection port portion of the compressed air inflation dedicated hose, for example, to a tire which is not punctured but whose air pressure is reduced, or any air-inflation target object such as a rubber dinghy and an inflatable swim ring, then changing over the changeover switch and driving the compressor, the air-inflation target object can be inflated solely with the compressed air. In this manner, pressure rising and inflation of the air-inflation target object can easily be carried out.

Further, a passage flow channel of the sealing agent and the compressed air that are involved with the puncture repair, and a passage flow channel of the compressed air solely that is involved with pressure rising and inflation of the air-inflation target object are branched from the changeover switch, and thus they are independently formed. Accordingly, the changeover switch and the compressed air inflation dedicated hose are not smeared and damaged with the sealing agent when carrying out the puncture repair, which in turn makes it possible to prevent failure of the changeover switch which may otherwise be caused by the sealing agent, and to carry out inflation of the target object with the compressed air in a clean manner. Further, the components that may be smeared and damaged by the puncture repair are limited to the sealing agent container and the puncture repair dedicated hose, and the expensive changeover switch is excluded. Thus, the puncture repair can repeatedly be carried out having just the sealing agent container and the puncture repair dedicated hose replaced, which in turn brings about a reduction in costs.

### Brief Description of Drawings

FIG. 1 is a perspective view showing one embodiment of a tire puncture repair apparatus according to the present invention;
FIG. 2 is an exploded perspective view showing a state where a front case portion is removed;
FIG. 3 is a front elevation view showing a state where the front case portion is removed;
FIG. 4 is a perspective view showing a state where the front case portion is removed;
FIG. 5 is a cross-sectional view showing a sealing agent container;
FIGS. 6A and 6B are cross-sectional views showing a changeover switch;
FIG. 7A is a cross-sectional end view taken along line A-A in FIG. 6A;
FIG. 7B is a cross-sectional end view taken along line B-B in FIG. 6B;

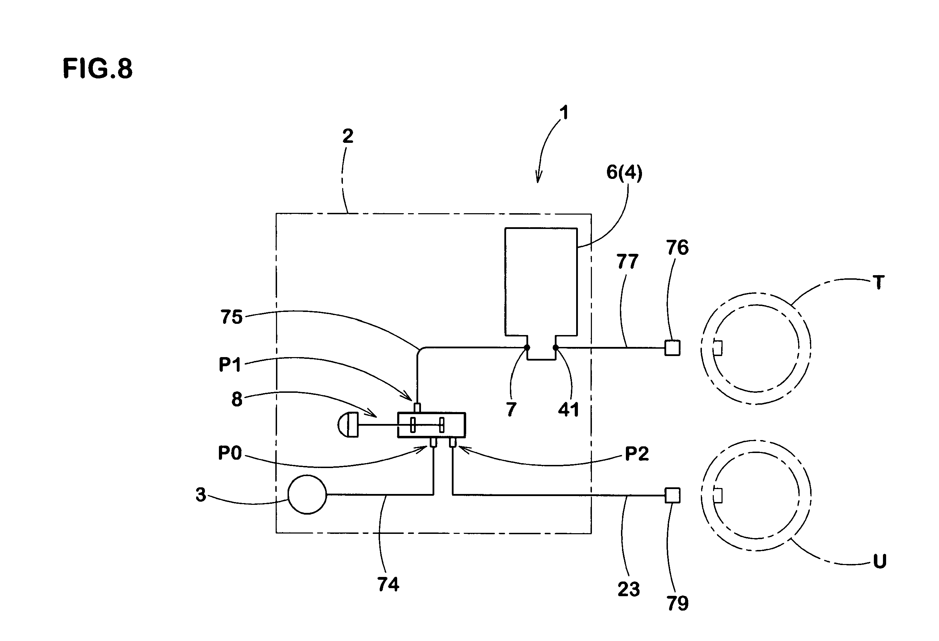

FIG. 8 is a conceptual diagram showing the piping state of the puncture repair apparatus;
FIG. 9 is a cross-sectional view showing a tire valve;
FIG. 10 is a cross-sectional view showing a connection port portion;
FIG. 11 is a cross-sectional view showing the action of a core pushing protrusion portion provided at a closure cap;
FIG. 12 is a cross-sectional view showing the attached state of the connection port portion and the tire valve; and
FIGS. 13A and 13B are perspective views for describing a conventional puncture repair apparatus.

### Brief Description of Numerals

- 1: Puncture repair apparatus
- 2: Housing case
- 3: Compressor
- 4: Container body
- 4: A mouth portion
- 5: Cap element
- 6: Sealing agent container
- 7: Air intake port portion
- 8: Changeover switch
- 23: Compressed air inflation dedicated hose
- 40: Stopper means
- 41: Sealing agent/compressed air ejector port portion
- 51: Valve case
- 52: Center bore
- 53: Valve shaft
- 54: First valve seat portion
- 55: Second valve seat portion
- 58: Valve shaft portion
- 60: First valve element
- 61: Second valve element
- 63: Spring means
- 64: Operation lever
- 65: Push shaft portion
- 75: Connection hose
- 76: Connection port portion
- 77: Puncture repair dedicated hose
- 79: Connection port portion
- P0: In-flow port
- P1: Out-flow port
- P2: Out-flow port
- Q: Push-in position
- T: Tire
- U: Air-inflation target object

### Best Mode for Carrying Out the Invention

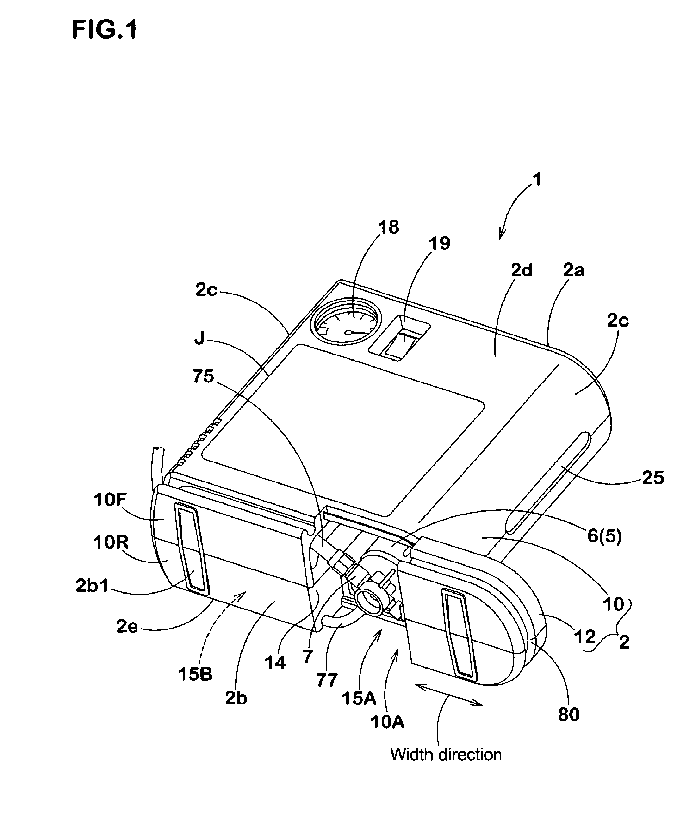

In the following, an embodiment of the present invention is described referring to the drawings. As shown in FIGS. 1 to 3, a tire puncture repair apparatus 1 of the present embodiment is formed to house, in a housing case 2, apparatus constituent members including at least a compressor 3 that produces compressed air, a sealing agent container 6 in which a cap element 5 is attached to a mouth portion 4A of a container body 4 that stores a sealing agent, and a changeover switch 8 that is interposed between the compressor 3 and an air intake port portion 7 of the sealing agent container 6.

The housing case 2 is structured to have a shape of an upright flat rectangular box, in which a surrounding frame made up of opposite side plate portions 2c, a front plate portion 2d and a rear plate portion 2e has its top and bottom sides closed by a top plate portion 2a and a bottom plate portion 2b. A foot portion 2b1 having a height of about 1 mm and being provided on each widthwise sides is arranged at the bottom face of the housing case 2, in order to achieve stable installation. In the present embodiment, the housing case 2 is formed with a main case 10 that has an opening portion 10A opening on one widthwise side (right side in the drawing) at the bottom portion, and a bottom cover 12 that removably attaches to the main case 10 so as to close the opening portion 10A. Inside the main case 10, a dividing wall element 14 extending upward and downward is provided. Thus, the inside of the main case 10 is partitioned into a first housing space 15A being situated on one widthwise side and communicating with the opening portion 10A, and a second housing space 15B being situated on the other widthwise side.

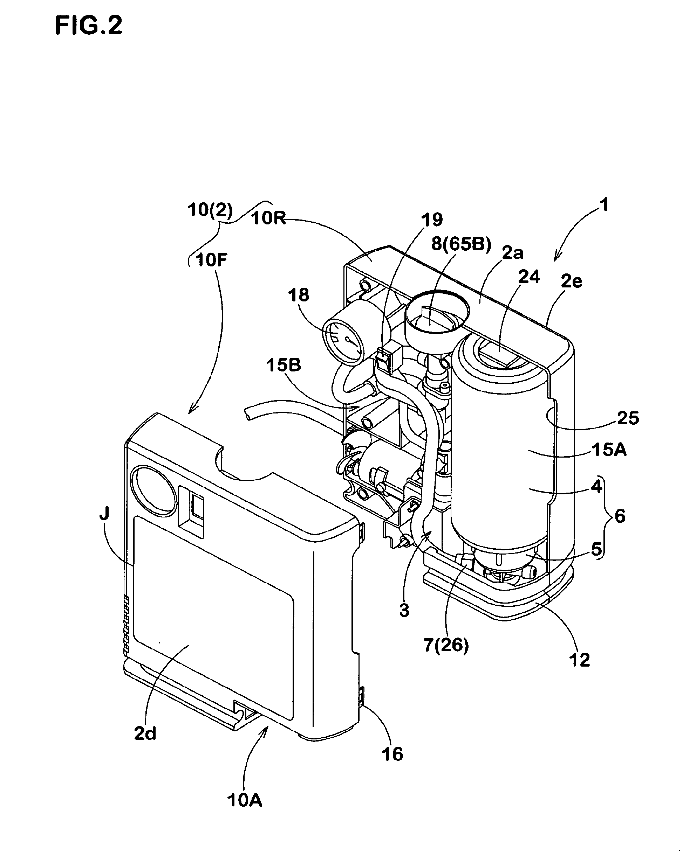

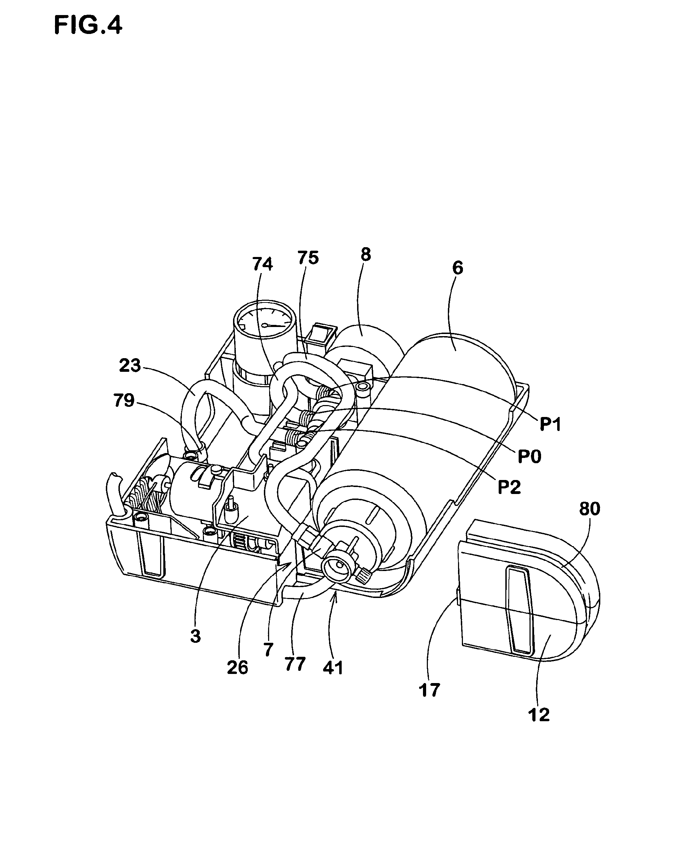

Further, the main case 10 can be divided into a front case portion 10F which includes the front plate portion 2d and a rear case portion 10R which includes the rear plate portion 2e. The front case portion 10F and the rear case portion 10R are engagingly stopped by hook portions 16 (shown in FIG. 2) that are provided, for example, two or three pieces in number, at the side face situated on the first housing space 15A side, and that are fixed by screw fittings being four to six pieces in number, for example, from the rear plate portion 2e side. The bottom cover 12 is guided by a guide (not shown) such as a groove or a rail slidably in the width direction. In a closed state, the bottom cover 12 is fixed, while being allowed to be removed easily, by a hook portion 17 (shown in FIG. 4) to the main case 10.

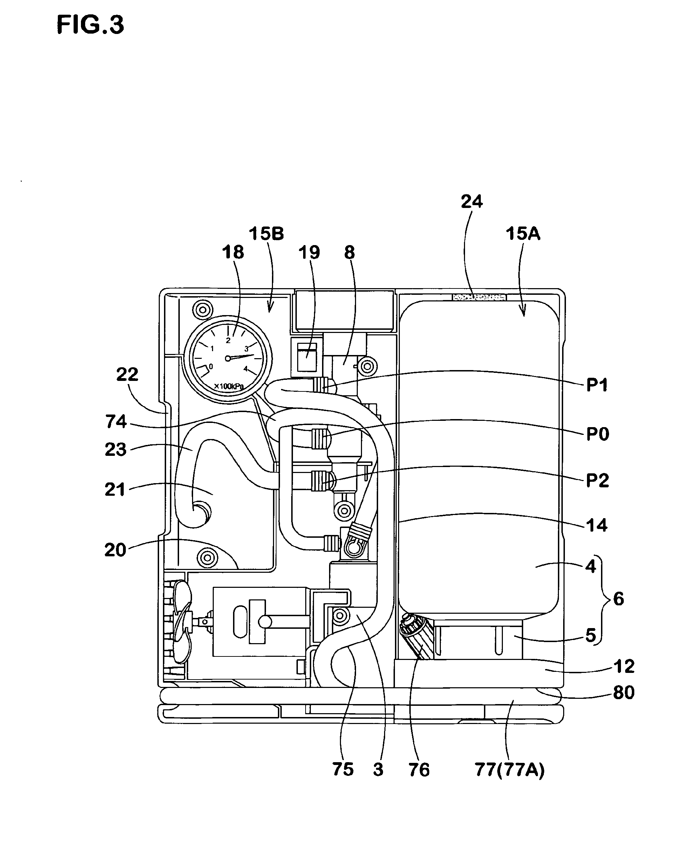

Next, as the compressor 3, one of various commercially available small compressors that is driven as being powered by a battery of an automobile may be adopted. Since the compressor 3 weighs heavy, when it is attached at a lower portion in the second housing space 15B so as to lower the center of gravity, the puncture repair apparatus 1 can be installed in a further stable manner. Above the compressor 3, a pressure gauge 18 that measures the pressure of compressed air being produced by the compressor 3, and a power switch 19 of the compressor 3 are arranged side by side such that they can be recognized visually and operated from the front side. Inside the second housing space 15B and between the pressure gauge 18 and the compressor 3, as shown in FIG. 3, a wide housing space 21 is further formed, which is partitioned by a partition plate 20 and opens by a cutout window 22 that is provided at the side face of the main case 10. Such an arrangement is advantageous in establishing a wide display portion J (shown in FIGS. 1 and 2) for showing the handling explanation at the front face of the housing case 2. The housing space 21 houses a power cord (not shown) that extends from the power switch 19 and that can be connected to a cigar lighter socket of an automobile, and a compressed air inflation dedicated hose 23, which will be described later, in a manner where they can be taken out therefrom.

Next, the sealing agent container 6 is made up of the container body 4 and the cap element 5 that attaches to the mouth portion 4A of the container body 4. The sealing agent container 6 is housed upside-down in the first housing space 15A, having the cap element 5 directed downward. The sealing agent container 6 can be vertically put into or taken out from the first housing space 15A through the opening portion 10A. The bottom cover 12 is slidably guided in the width direction that is perpendicular to the put into/taken out direction, which functions to prevent the bottom cover 12 from coming off, which would otherwise results in falling out of the sealing agent container 6 from the opening portion 10A. Here, in order for the sealing agent container 6 not to rattle in the first housing space 15A, a cushion 24 (shown in FIG. 2) that is made of a sponge material and that abuts on the bottom face (top face when upside down) of the container body 4 is adhered to the inner face of the top plate portion 2a in the first housing space 15A. For the same purpose, the inner side face of the first housing space 15A is formed to have an arc-shaped curved surface that conforms to the outer side face of the container body 4. The cushion 24 is capable of absorbing vibration associated with installation on the automobile, and also capable of exhibiting an effect of preventing the rubber component contained in the sealing agent from being deteriorated because of agglomeration caused by the vibration. Further, at the side face of the main case 10, a cutout window 25 is provided for making it possible to visually check whether or not the sealing agent container 6 is housed.

Further, as described in the foregoing, the puncture repair apparatus 1 of the present invention also has a function of inflating an object solely with the compressed air. Therefore, for example, the puncture repair apparatus 1 can be used as a compressed air inflator for any air-inflation target object U, such as for raising the pressure of a tire, which is not punctured but whose air pressure is reduced, to the regular internal pressure, and for inflating a rubber dinghy or an inflatable swim ring. Here, it should be noted that heat generated by actuation of the compressor 3 may possibly be transferred to the stored sealing agent, resulting in thermal degradation of the sealing agent. However, the puncture repair apparatus 1 of the present embodiment separates the first housing space 15A in which the sealing agent container 6 is housed and the second housing space 15B in which the compressor 3 is housed by the dividing wall element 14. Accordingly, the dividing wall element 14 functions as a heat insulating plate, so as to shield the heat from the compressor 3 to prevent the thermal degradation of the sealing agent.

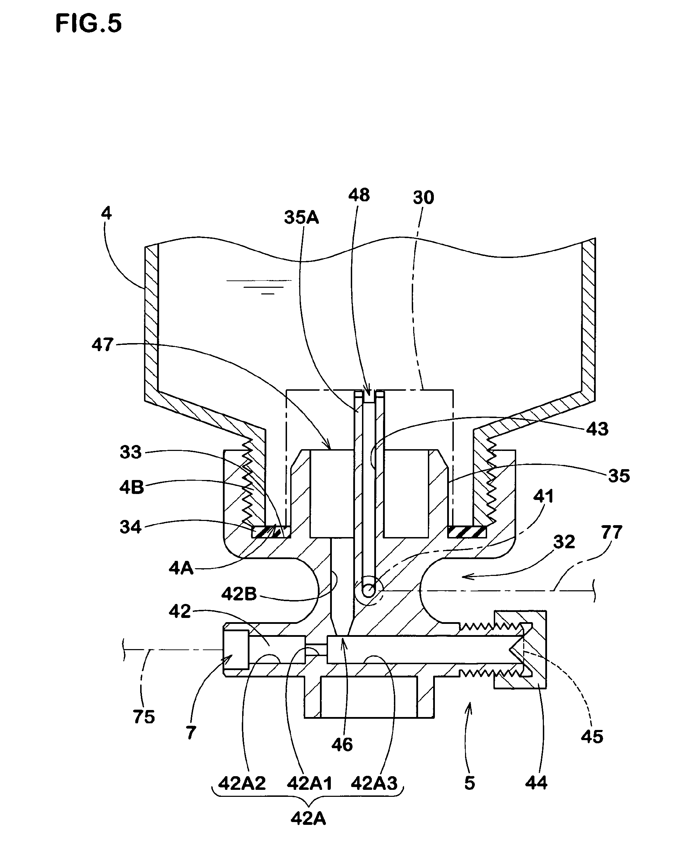

As shown in FIG. 5, the container body 4 is a bottle-like pressure-resistant container which preferably can withstand a pressure equal to or greater than 300 kPa. At the tip portion of a neck portion 4B of the container body 4, the mouth portion 4A is opened.

The cap element 5 includes a trunk portion 32 of a cylindrical shape, for example, and a mount-purpose concave portion 33 that is integrally formed with the trunk portion 32, and into which the neck portion 4B of the container body 4 is inserted so as to be fixed. In the present embodiment, the trunk portion 32 is in a stepwise columnar shape, whose one end side (top end side in FIG. 5) has the larger diameter. At the end face on the larger diameter side (top end face in FIG. 5), the mount-purpose concave portion 33 is provided in a concave manner. The mount-purpose concave portion 33 has an inner screw thread cut at its inner wall face, whereby the neck portion 4B of the container body 4 is screwed into place. A packing member 34 is interposed between the bottom face of the mount-purpose concave portion 33 and the neck portion 4B, so as to close the mouth portion 4A in an air-tight manner.

Further, according to the present embodiment, in the mount-purpose concave portion 33, a boss portion 35 of a cylindrical shape, for example, that rises from the bottom face of the mount-purpose concave portion 33 and reaches inside the mouth portion 4A of the container body 4 projects. To the outer circumference face of the boss portion 35, an intermediate cap 30 (shown by an alternate long and short dash line) is elastically fitted, for preventing the puncture sealing agent in the container body 4 from flowing out, in a situation such as during storage. The intermediate cap 30 automatically comes off from the boss portion 35 by the pressure of the compressed air from the compressor 3.

The trunk portion 32 is provided, each in a projecting manner, with a nipple-like air intake port portion 7 that sends the compressed air from the compressor 3 into the container body 4, and a nipple-like sealing agent/compressed air ejector port portion 41 that sends out the puncture sealing agent and the compressed air successively from the container body 4 by the sent compressed air. The air intake port portion 7 and the sealing agent/compressed air ejector port portion 41 are communicating with the inside of the container body 4 respectively via first and second flow channels 42 and 43 that pass through the trunk portion 32.

In the present embodiment, the first flow channel 42 is formed by: a horizontal flow channel portion 42A that horizontally and linearly extends from the air intake port portion 7, and that is provided at its tip with an open/close port 45 that is capable of being opened and closed by removal and attachment of an open/close cap 44; and a vertical flow channel portion 42B that crosses the horizontal flow channel portion 42A at a communication port 46, and that linearly extends upward from the communication port 46.

The horizontal flow channel portion 42A is formed as a linear venturi flow channel having an upstream main flow channel portion 42A2 that reaches the air intake port portion 7 and a downstream main flow channel portion 42A3 that reaches the open/close port 45, respectively on opposite ends of a venturi portion 42A1 whose diameter (flow channel diameter) is narrowed. The vertical flow channel portion 42B starts from the communication port 46 to pass through the trunk portion 32 and extends upward. The top end of the vertical flow channel portion 42B opens at a mouth portion 47 at the top end of the boss portion 35. Note that, while the communication port 46 can be formed at the venturi portion 42A1, the present embodiment shows an exemplary case where the communication port 46 is formed at the location near the venturi portion 42A1 of the main flow channel portion 42A3 on the downstream side. Specifically, the distance from the venturi portion 42A1 to the center of the communication port 46 is equal to or smaller than 3.0 mm. When the open/close port 45 is closed, the first flow channel 42 sends the compressed air from the compressor 3 into the container body 4. When the open/close port 45 is open, the compressed air from the compressor 3 is discharged from the open/close port 45. Here, owing to the venturi effect, a negative pressure can be generated in the vertical flow channel portion 42B. Accordingly, the apparatus of the present invention can be used in a collecting work such as extracting and collecting the puncture sealing agent in a tire at any location where the tire is repaired, such as an automotive repair garage, by suctioning the puncture sealing agent in the tire from a puncture repair dedicated hose 77 and returning it in the container body 4.

The second flow channel 43 linearly extends upward from the sealing agent/compressed air ejector port portion 41. The top end of the second flow channel 43 opens at a mouth portion 48 that is situated above the top end of the boss portion 35. The present embodiment shows an exemplary case where the mouth portion 48 is formed as a center port at the tip of a sleeve portion 35A that rises along the center axis of the boss portion 35.

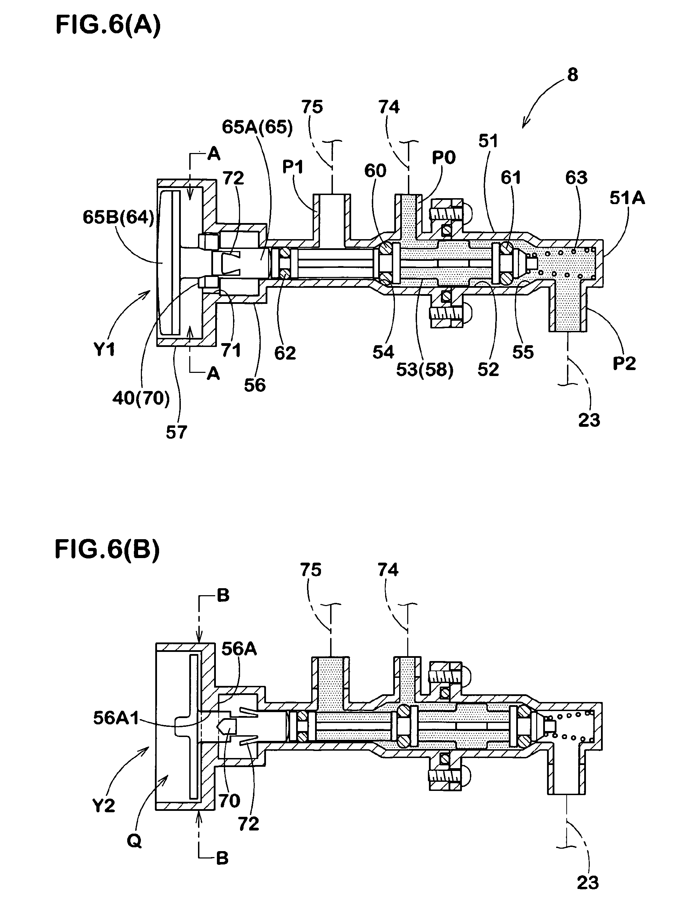

Next, the changeover switch 8 is interposed between the compressor 3 and the air intake port portion 7. As schematically shown in FIGS. 6A and 6B, the changeover switch 8 is structured to include a tubular valve case 51 and a valve shaft 53 that is concentrically arranged within a center bore 52 of the tubular valve case 51.

The valve case 51 includes cone-like first and second valve seat portions 54 and 55 at the inner face of the center bore 52. At the circumferential wall of the valve case 51, a nipple-like in-flow port P0 that opens between the first and second valve seat portions 54 and 55, and nipple-like first and second out-flow ports P1 and P2 that open on the outer sides of the first and second valve seat portions 54 and 55, respectively, are provided in a projecting manner. The front end of the valve case 51 is closed by a front wall portion 51A. On the rear end side of the valve case 51, first and second larger diameter portions 56 and 57 are continuously provided with a step portion between them.

The valve shaft 53 includes a valve shaft portion 58 that is arranged so as to slidably move between one shaft core line side (rear side in the present embodiment) and the other side (front side in the present embodiment) inside the center bore 52. The valve shaft portion 58 is provided with a first valve element 60 that abuts on the first valve seat portion 54 by the slide movement toward the one side thereby closing the valve seat portion 54, and a second valve element 61 that abuts on the second valve seat portion 55 by the slide movement toward the other side thereby closing the valve seat portion 55. The valve elements 60 and 61 are formed by rubber elastic bodies. In the present embodiment, the valve shaft portion 58 is formed to have a cross-sectional shape of a cross shape, such that a wider space through which the compressed air passes is created between the valve shaft portion 58 and the inner face of the center bore 52. At the rear end portion of the valve shaft portion 58, a ring-like packing 62 is arranged for preventing leakage of the compressed air from the rear end side.

Between the front end portion of the valve shaft 53 and the front wall portion 51A, spring means 63 is arranged for biasing the valve shaft 53 toward one side (rear side in the present embodiment) thereby closing the first valve seat portion 54, the spring means 63 being a coil-spring like, for example.

On the rear end side of the valve shaft 53 and in alignment therewith, an operation lever 64 for manually operating the changeover switch 8 is arranged. The operation lever 64 includes a push shaft portion 65 to be manually pushed in, so as to push and move the valve shaft 53 toward the other side (front side in the present embodiment) thereby closing the second valve seat portion 55, and stopper means 40 that is capable of stopping the push shaft portion 65 at a push-in position Q by the operation lever 64 being rotated at the push-in position Q about the shaft core by 90°.

Specifically, the push shaft portion 65 is made up of a linear base shaft portion 65A and a disk-like knob portion 65B being provided in an expanded manner at the rear end of the linear base shaft portion 65A. Note that, at the rear end side of the first larger diameter portion 56 of the valve case 51, a wall plate 56A having a bore portion 56A1 being concentric with the center bore 52 is formed. By the base shaft portion 65A being movably inserted into the center bore 52 and the bore portion 56A1 of the valve case 51, the push shaft portion 65 is rotatably held concentrically with the valve shaft 53 and about the shaft center thereof.

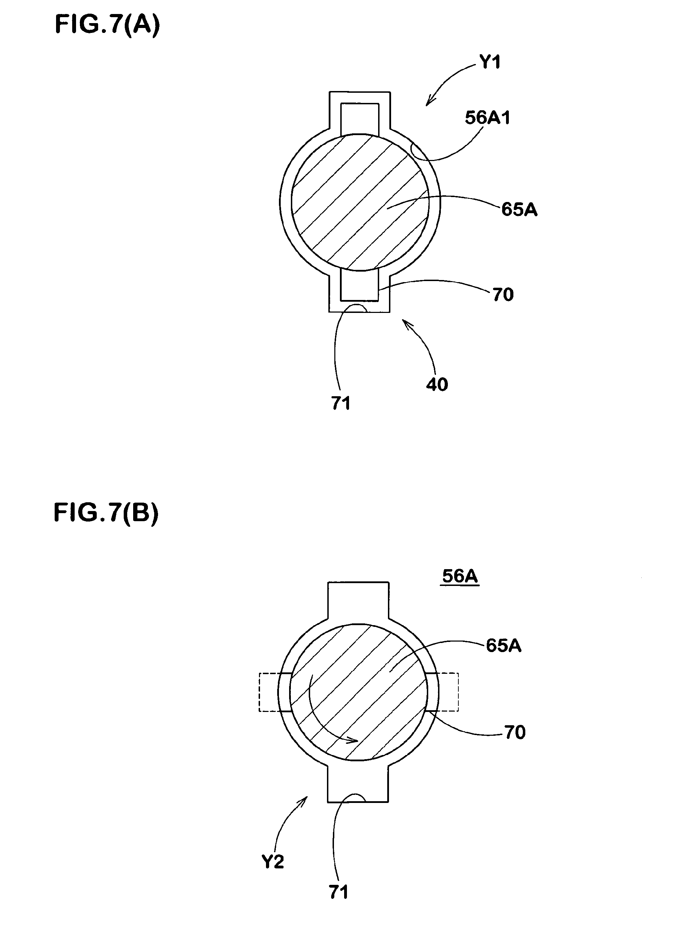

As shown in FIGS. 7A and 7B which are cross-sectional views taken along an A-A cross-sectional line and a B-B cross-sectional line in FIGS. 6A and 6B, respectively, the stopper means 40 includes an engagingly stopping portion 70 that projects from the side face of the base shaft portion 65A, and a cutout portion 71 formed at the bore portion 56A1 and through which the engagingly stopping portion 70 passes. In a state Y1 where the engagingly stopping portion 70 and the cutout portion 71 are aligned, the operation lever 64 can be pushed in toward the other side (front side in the present embodiment) up to the push-in position Q where the engagingly stopping portion 70 passes through the cutout portion 71. Then, by rotating the operation lever 64 by 90° at the push-in position Q (state Y2), the engagingly stopping portion 70 and the wall plate 56A abut on each other. In this manner, the push shaft portion 65 can be stopped at the push-in position Q. It is noted that, in order to prevent the push shaft portion 65 from coming off from the bore portion 56A1 in the state Y1, the base shaft portion 65A is provided in a projecting manner with a retaining portion 72 (shown in FIG. 6) that abuts on the wall plate 56A in the state Y1. The retaining portion 72 is formed by cutting and raising part of the base shaft portion 65A. Accordingly, when assembling the changeover switch 8, the retaining portion 72 can easily pass through the bore portion 56A1.

Next, as shown in FIGS. 4 and 6, the in-flow port P0 of the changeover switch 8 and the compressor 3 are connected to each other by an in-flow hose 74, and the first out-flow port P1 and the air intake port portion 7 are connected to each other by a connection hose 75. Here, the connection between at least the connection hose 75 and the air intake port portion 7 must be achieved using a removable coupling portion 26. As the coupling portion 26, one of various coupling fittings of screw coupling type, single-step type and the like that do not require any tool can be employed. In particular, considering the workability, the single-step type coupling fitting can suitably be employed. Because the connection hose 75 extends while penetrating through the dividing wall element 14, the coupling portion 26 is arranged in the first housing space 15A, and can easily be removed or attached by manual operation through the opening portion 10A.

The changeover switch 8 is attached inside the second housing space 15B, with its knob portion 65B exposed at the top plate portion 2a of the housing case 2.

Coupled to the sealing agent/compressed air ejector port portion 41 is one end of the puncture repair dedicated hose 77, the other end of which is provided with a connection port portion 76 (shown in FIG. 3) that can be connected to a punctured tire T. The puncture repair dedicated hose 77 extends through the opening portion 10A or a cutout portion (not shown) provided at the bottom cover 12 to the outside of the case. Such an extension portion 77A is wound circumferentially in a circumferential groove-like housing concave portion 80 that is provided at the circumferential wall of the housing case 2, so as to be housed and held therein. In the present embodiment, the housing concave portion 80 is formed so as to partially occupy the bottom cover 12 also. Such a structure prevents the bottom cover 12 from coming off in the wound state, where the puncture repair dedicated hose 77 is housed.

Coupled to the second out-flow port P2 is one end of the compressed air inflation dedicated hose 23, the other end of which is provided with a connection port portion 79 that can be connected to any air-inflation target object U other than a punctured tire. As described in the foregoing, the compressed air inflation dedicated hose 23 is housed in the housing space 21 with the power cord, in a manner where they can be taken out therefrom.

In this manner, by simply unwinding the puncture repair dedicated hose 77 in the housing concave portion 80 as being wound around the housing case 2, the assembly and the piping work of the apparatus 1 can be carried out. Also, when the puncture repair is finished, by simply winding the puncture repair dedicated hose 77 as it was along the housing concave portion 80, it can be stowed. Thus, the preparation or stowing work of the apparatus can be carried out in a clean and simple manner. Further, by simply opening the opening portion 10A using the bottom cover 12 and manually decoupling therefrom the sealing agent container 6 and the connection hose 75 that are coupled by the coupling portion 26, the sealing agent container 6 can be taken out integrally with the puncture repair dedicated hose 77 that is coupled thereto. Thus, replacement work of the used sealing agent container can also be carried out in a clean and simple manner. It should be noted that, by a similar operation, replacement work of an unused but expired sealing agent container can also be carried out in a clean and simple manner.

Next, because the puncture repair apparatus 1 includes two hoses, i.e., the puncture repair dedicated hose 77 and the compressed air inflation dedicated hose 23, the compressed air inflation dedicated hose 23 may possibly be mistakenly connected to the tire valve V when repairing puncture, resulting in the sealing agent flowing out from the unconnected puncture repair dedicated hose 77 and contaminating the surroundings. Another possible case may be a mistaken actuation of the compressor 3 before the puncture repair dedicated hose 77 is connected to the tire valve V, which also invites contamination of the surroundings by the flown-out sealing agent. Still another possibility is that, when finishing the puncture repair and removing the connection port portion 76 of the puncture repair dedicated hose 77 from the tire valve V, the sealing agent adhering in the hose tends to spatter from the gap between the connection port portion 76 and the tire valve V, thus attaching to the hands or clothes of the user.

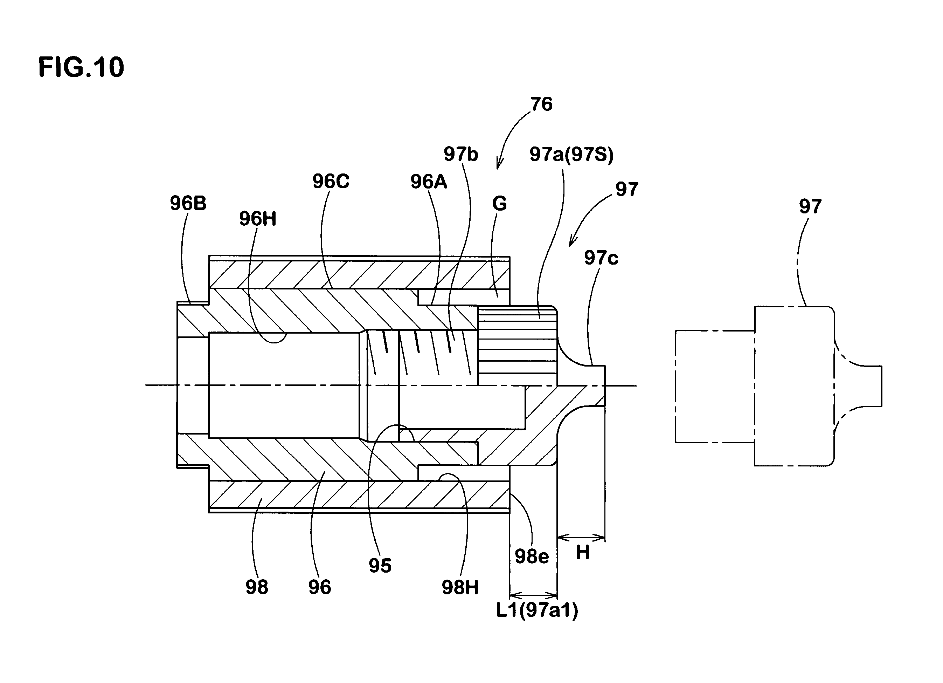

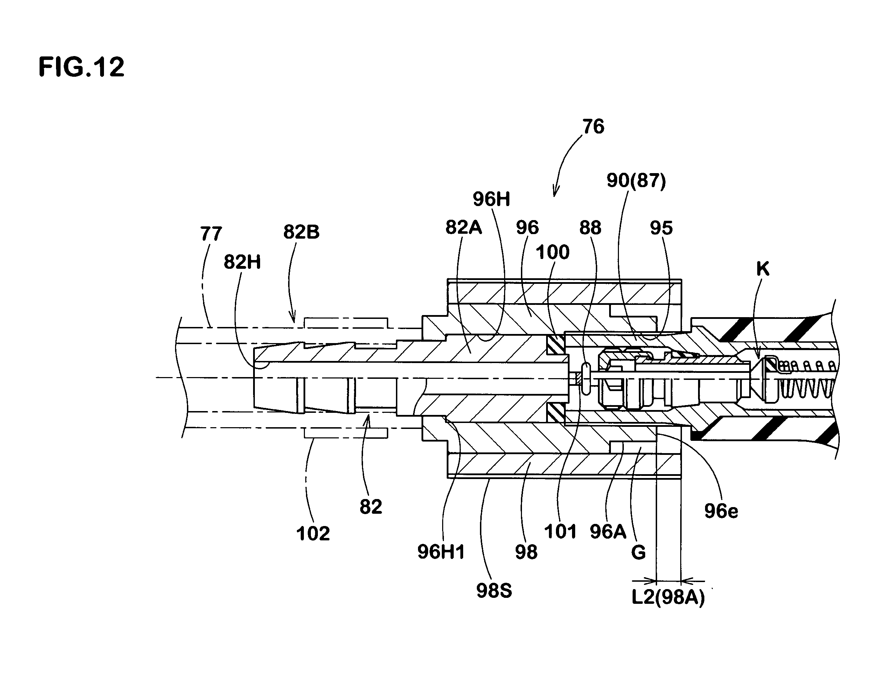

In order to prevent such possibilities, the connection port portion 76 of the puncture repair dedicated hose 77 is structured as follows. Specifically, as shown in FIGS. 10 and 12, the connection port portion 76 includes: a connection fitting body 96 that is provided at its front end portion with a connection screw portion 95 that can be screwed into place at a valve stem 87 of the tire valve V; a closure cap 97 that is removably arranged at the connection screw portion 95, the removal of which allows the connection screw portion 95 to be screwed into place at the valve stem 87; and a cylindrical outer sleeve 98 that is fixed to the outer circumference of the connection fitting body 96. The outer sleeve 98 has a stick-out portion 98A that sticks out frontward than the front end of the connection fitting body 96.

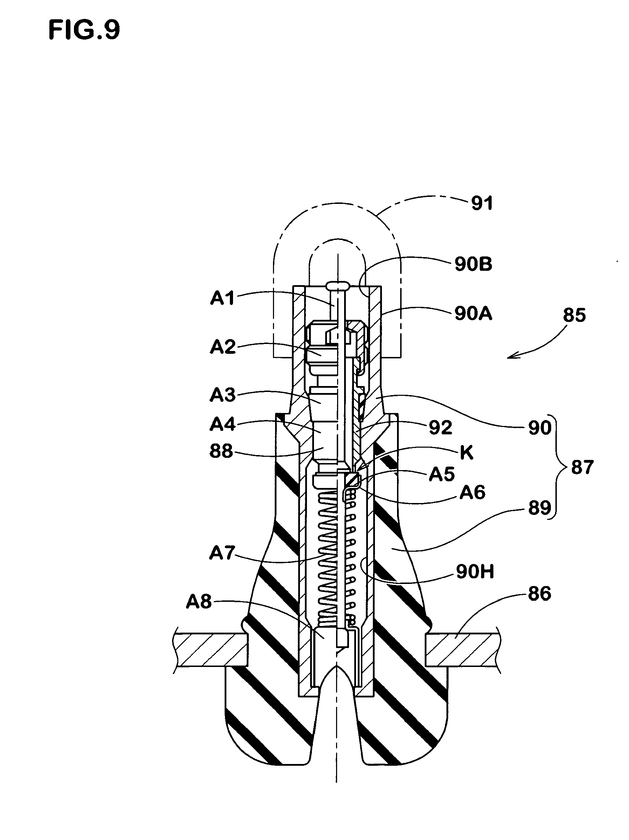

Here, the tire valve 85 is an automobile tire valve that satisfies a certain standard such as JISD4207. FIG. 9 exemplarily shows a general snap-in type tire valve. The tire valve 85 has a well-known structure, i.e., it includes a valve stem 87 being fixed to a rim 86 and a valve core 88 being attached to an inner bore 90H of the valve stem 87. In the present embodiment, the valve stem 87 includes a rubber seat 89 that attaches to the rim 86, and a tubular valve stem body 90 that is integrally fixed to the rubber seat 89. At the tip portion of the valve stem body 90, an outer screw thread portion 90AA for screwing a valve cap 91 is formed on the outer circumferential side, and an inner screw thread portion 90B for screwing the valve core 88 is formed on the inner circumferential side.

The valve core 88 is structured with components such as a shaft A1, a head A2, a trunk packing A3, a trunk A4, a valve packing A5, a valve packing receiver A6, a spring A7, and a spring receiver A8. The head A2, the trunk packing A3, and the trunk A4 are formed as an integrally coupled unit 92, and fixed by the inner screw thread portion 90B. The shaft A1, the valve packing A5, and the valve packing receiver A6 are integrated, and held by the unit 92 so as to be slidable upward and downward. The valve core 88 has its valve portion K between a valve seat portion at the lower end of the trunk A4 and the valve packing A5 normally closed as being pressed by the spring A7 that is interposed between the valve packing receiver A6 and the spring receiver A8, whereby the tire cavity is maintained air-tight. When inflating the tire cavity with air, the valve seat portion at the lower end of the trunk A4 and the valve packing A5 are separated from each other by the pressure of the inflating air, thereby forming a gap through which the inflating air is supplied.

Next, as shown in FIG. 10, the connection port portion 76 includes: a cylindrical connection fitting body 96 that is provided at its front end portion a connection screw portion 95 that can be screwed into place at an outer screw thread portion 90A of the valve stem body 90; a closure cap 97 that is removably arranged at the connection screw portion 95; and a cylindrical outer sleeve 98 that is fixed to the outer circumference of the connection fitting body 96. In the present embodiment, the connection fitting body 96 is in a stepwise sleeve-like shape, in which smaller diameter portions 96A and 96B are respectively arranged at front and rear of a larger diameter portion 96C. In an inner bore 96H thereof, the connection screw portion 95 is formed in an inner screw thread form.

The closure cap 97 includes a pinch portion 97a for the closure cap 97 to be pinched between fingers to be rotated, and a screw portion 97b that is formed in an outer screw thread form, that projects stepwise at the rear end of the pinch portion 97a, and that screws into place with the connection screw portion 95. The pinch portion 97a is smaller in diameter than an inner bore 98H of the outer sleeve 98, and extends frontward by a length L1 of at least 5 mm than a tip 98e of the outer sleeve 98. With such an extend-out portion 97a1, the closure cap 97 can be pinched between fingers and screwed, and removed from the connection fitting body 96. Note that, in order for such a screwing to be operated easier, at the outer circumference face of the pinch portion 97a, a knurl portion 97S made up of a plurality of grooves extending along the shaft core is provided.

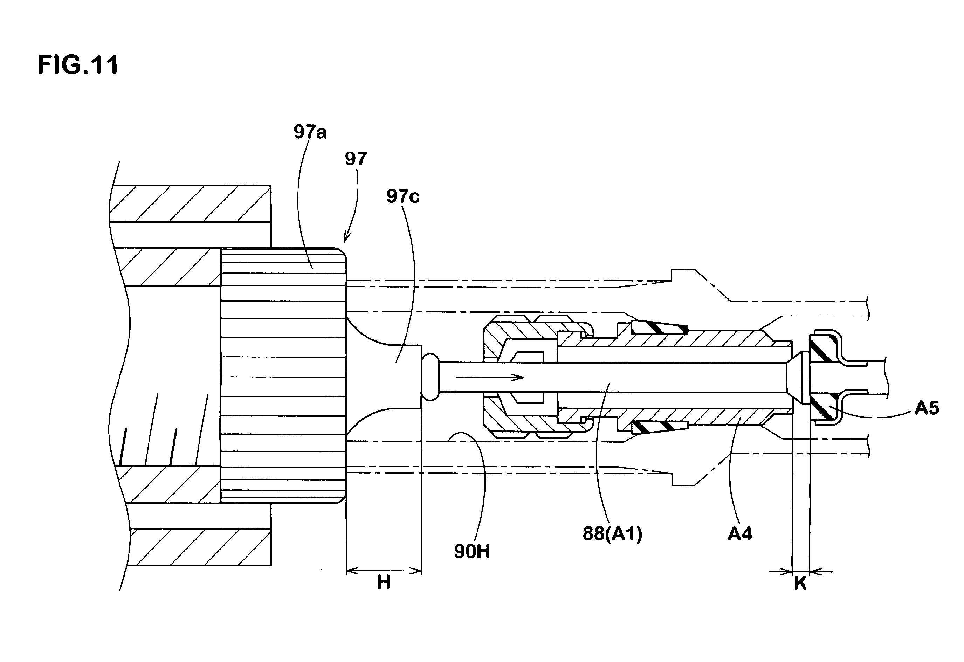

The closure cap 97 includes, at the front end of the pinch portion 97a, a core pushing protrusion portion 97c that can push to move the tip of the valve core 88 of the tire valve 85. As shown in FIG. 11, the core pushing protrusion portion 97c pushes to move the tip of the valve core 88, that is, the tip of the shaft A1, so as to separate away the valve portion K located between the valve seat portion at the lower end of the trunk A4 and the valve packing A5, thereby causing the air in the tire to be exhausted from the tire valve 85. Here, when the puncture repair apparatus 1 is of a general-purpose type, the tire T whose internal pressure is reduced can be inflated, e.g., to the regular internal pressure using the compressed air inflation dedicated hose 23. In such a situation, if the internal pressure is excessively increased, the tire pressure can be reduced using the core pushing protrusion portion 97c. The core pushing protrusion portion 97c is smaller in diameter than the inner bore 90H of the valve stem body 90, and the protrusion height H from the front end of the pinch portion 97a preferably falls within a range of 2 to 4 mm.

As shown in FIG. 12, in connection with the connection port portion 76, by removing the closure cap 97, the valve stem body 90, instead of the closure cap 97, can be screwed into place with the connection fitting body 96. Here, because the gauge of the connection port portion 76 is increased by the outer sleeve 98, the screwing operability can be enhanced. The outer sleeve 98 is integrally fixed with the connection fitting body 96 by press fitting, for example. Further, in order for the screwing to be operated further easier, at the outer circumference face thereof, a knurl portion 98S made up of a plurality of grooves extending along the shaft core is formed. Still further, the outer sleeve 98 has the stick-out portion 98A that sticks out frontward than the front end 96e of the connection fitting body 96.

The stick-out portion 98A functions as a shielding plate. For example, when finishing the inflation operations with the sealing agent and the compressed air and removing the connection fitting body 96 from the valve stem body 90, the sealing agent may spatter from the gap between the connection fitting body 96 and the valve stem body 90. In such a situation, the stick-out portion 98A can block the sealing agent spattering toward the rear side. Accordingly, the sealing agent is prevented from adhering to the user, and the puncture repair work can be carried out in a clean manner. To this end, a stick-out amount L2 of the stick-out portion 98A from the front end 96e of the connection fitting body 96 is preferably falls within a range of 1 to 5 mm. When it is smaller than 1.0 mm, the shielding function becomes inadequate. On the other hand, when it exceeds 5.0 mm, gripping to the valve stem body 90 is reduced. It is noted that, in the present embodiment, a smaller diameter portion 96A is provided on the front end side of the connection fitting body 96, thereby creating a small gap G relative to the outer sleeve 98. The small gap G contributes toward improving the shielding function.

As shown in FIG. 12, in the present embodiment, the connection port portion 76 is attached to the puncture repair dedicated hose 77 by a tubular joint fitting 82 that has an inner bore 82H communicating with the inner bore 96H. The joint fitting 82 includes: a trunk portion 82A that is inserted into the inner bore 96H of the connection fitting body 96 so as to be rotatably connected to the connection fitting body 96; and a hose coupling portion 82B that integrally continues to the trunk portion 82A and extends rearward, and that is capable of coupling to the puncture repair dedicated hose 77 by fitting, for example, the hose coupling portion 82B being tapered down toward its tip, for example. The trunk portion 82A engages with a step portion 96H1 provided at the inner bore 96H, thereby being prevented from coming off. Arranged at the front end portion of the trunk portion 82A is a packing member 100, which is compressed against the valve stem body 90 and sealed, thereby attaining an air-tight coupling. The reference numeral 101 denotes a protrusion provided at the front end portion of the trunk portion 82A. When the valve stem body 90 is screwed into place with the connection fitting body 96, the protrusion 101 pushes to move the valve core 88 so as to move away the valve portion K. The reference numeral 102 denotes a ring-like hose retainer fitting that compresses the puncture repair dedicated hose 77 against the hose coupling portion 82B so as to be fixed. It is noted that, any joint fitting having one of various conventional structures can be employed as the joint fitting 82. Further, it is also possible to form the hose coupling portion 82B at the connection fitting body 96, such that the puncture repair dedicated hose 77 is directly attached to the connection port portion 76 without having the joint fitting 82 interposed.

While the particularly preferred embodiment of the present invention has been described in the foregoing, the present invention can be carried out in various modes, without being limited to the illustrated embodiment.

## Claims

1. A tire puncture repair apparatus, comprising a housing case, storing therein:
a compressor that produces compressed air;
a sealing agent container that includes a container body storing therein a sealing agent for sealing a punctured tire, and a cap element attaching to a mouth portion of the container body, the cap element being provided with an air intake port portion for sending the compressed air from the compressor to the container body and a sealing agent/compressed air ejector port portion for successively ejecting, by the sent compressed air, the puncture sealing agent and the compressed air from the container body; and
a changeover switch interposed between the compressor and the air intake port portion, wherein
the changeover switch has an in-flow port into which the compressed air from the compressor flows in, and first and second out-flow ports that are selectively changed over to communicate with the in-flow port,
the first out-flow port and the air intake port portion are connected to each other by a connection hose,
the sealing agent/compressed air ejector port portion is coupled to one end of a puncture repair dedicated hose, the puncture repair dedicated hose being provided at its other end with a connection port portion that can be connected to the punctured tire, and
the second out-flow port is coupled to one end of a compressed air inflation dedicated hose, the compressed air inflation dedicated hose being provided at its other end with a connection port portion that can be connected to an air-inflation target object other than the punctured tire.

2. The tire puncture repair apparatus according to claim 1,
wherein the changeover switch is manually operated for carrying out a changeover operation.

3. The tire puncture repair apparatus according to claim 1,
wherein
the changeover switch includes:
a tubular valve case that is provided with cone-like first and second valve seat portions inside a center bore, the in-flow port that opens between the first valve seat portion and the second valve seat portion, and the first and second out-flow ports that open on outer sides of the first and second valve seat portions, respectively;
a valve shaft that includes a valve shaft portion being slidably movable between one shaft core line side and the other side inside the center bore, the valve shaft portion being provided with a first valve element that abuts on the first valve seat portion by a slide movement toward the one side thereby closing the valve seat portion, and a second valve element that abuts on the second valve seat portion by a slide movement toward the other side thereby closing the valve seat portion;
spring means that biases the valve shaft toward the one side so as to cause the valve shaft to close the first valve seat portion; and
an operation lever that has a push shaft portion to be manually pushed in, so as to push and move the valve shaft toward the other side thereby closing the second valve seat portion, and stopper means being capable of stopping the push shaft portion at a push-in position by the operation lever being rotated at the push-in position about a shaft core by 90°.
